# EUROPEAN PATENT SPECIFICATION

(11) **EP 3 356 474 B1**
(45) Date of publication and mention of the grant of the patent: **30.09.2020**
(21) Application number: 16785018.9
(22) Date of filing: 30.09.2016
(51) Int. Cl.: C09D 7/00

(54) **COATINGS INCORPORATING HYDROPHOBIC COMPOUNDS**
BESCHICHTUNGEN MIT HYDROPHOBEN VERBINDUNGEN
REVÊTEMENTS INTÉGRANT DES COMPOSÉS HYDROPHOBES

(30) Priority: 02.10.2015 US 201562236349 P
(43) Date of publication of application: 08.08.2018
(73) Proprietor: The Chemours Company FC, LLC, Wilmington, Delaware 19801 (US)
(72) Inventor: BROWN, Gerald Oronde, Wilmington, Delaware 19803 (US); SWOREN, John Christopher, Chadds Ford, Pennsylvania 19317 (US)
(74) Representative: Morf, Jan Stefan
(86) International application number: PCT/US2016/054591
(87) International publication number: WO 2017/059161

(56) References cited:
- WO-A1-95/18195
- WO-A1-2012/170832
- WO-A1-2013/061061
- WO-A1-2014/160905
- WO-A1-2016/049293
- WO-A2-2014/160906
- US-A- 2 640 038
- US-A1- 2004 082 699

## Description

### FIELD OF THE INVENTION

Hydrophobic substituted alcohols are employed in coatings to provide surface effects to various articles.

### BACKGROUND OF THE INVENTION

Fluorinated polymer compositions are used in the preparation of a wide variety of surface treatment materials to provide surface effects to substrates. Many such compositions are fluorinated acrylate polymers or copolymers which contain predominantly eight or more carbons in the perfluoroalkyl chain to provide the desired properties. Honda, et al., in Macromolecules, 2005, 38, 5699-5705 teach that for perfluoroalkyl chains of greater than 8 carbons, orientation of the perfluoroalkyl groups, designated Rf groups, is maintained in a parallel configuration while for such chains having 6 or less carbons, reorientation occurs. This reorientation is recited to decrease surface properties such as contact angle. Thus, polymers containing shorter perfluoroalkyl chains or having no fluorine content have traditionally exhibited lower performance. Non-fluorinated copolymers are known to provide water repellency and optionally stain release to textiles, but are less effective than the fluorinated counterparts. Fluoroadditives have also been used to improve cleanability of paints, including latex paints, which generally have poor stain and soil resistance.

US Patent 7,820,745 discloses aqueous water- and oil-repellent compositions containing a fluorinated copolymer in aqueous medium and a sorbitan ester used in small amounts to act as a surfactant.

### BRIEF SUMMARY OF THE INVENTION

The need exists for non-fluorinated or partially fluorinated compositions that provide surface effects to treated substrates, with performance results comparable to fluorinated treating agents. Also desirable is a non-fluorinated composition that can be bio-based derived. The present invention meets these needs.

The subject-matter of the present invention is defined in claims 1-15 as attached. The present invention relates to a coated article according to claim 1 comprising a partial or complete durable coating on the surface of an article, wherein the coating comprises a coating base and 0.1 to 5% by weight of a hydrophobic compound, based on the total solids weight of the coating, selected from a cyclic or acyclic alcohol which is substituted with at least one -R¹, -C(O)R¹, -(CH₂CH₂O)ₙ(CH(CH₃)CH₂O)ₘR²,-(CH₂CH₂O)ₙ(CH(CH₃)CH₂O)mC(O)R¹, or mixtures thereof; wherein each n is independently 0 to 20; each m is independently 0 to 20; m+n is greater than 0; each R¹ is independently a linear or branched alkyl group having 5 to 29 carbons optionally comprising at least 1 unsaturated bond; each R² is independently -H, a linear or branched alkyl group having 6 to 30 carbons optionally comprising at least 1 unsaturated bond; and the coating has a thickness of at least 0.1 mils.

The present invention further comprises a method according to claim 13 of imparting a surface effect to an article comprising contacting a the surface of the article with a durable coating to form a partially or completely coated article, wherein the coating comprises a coating base and 0.1 to 5% by weight of a hydrophobic compound, based on the total solids weight of the coating, selected from a cyclic or acyclic alcohol which is substituted with at least one -R¹, -C(O)R¹, -(CH₂CH₂O)ₙ(CH(CH₃)CH₂O)ₘR²,-(CH₂CH₂O)ₙ(CH(CH₃)CH₂O)ₘC(O)R¹, or mixtures thereof; wherein each n is independently 0 to 20; each m is independently 0 to 20; m+n is greater than 0; each R¹ is independently a linear or branched alkyl group having 5 to 29 carbons optionally comprising at least 1 unsaturated bond; each R² is independently -H, a linear or branched alkyl group having 6 to 30 carbons optionally comprising at least 1 unsaturated bond; and the coating has a thickness of at least 0.1 mils.

### DETAILED DESCRIPTION OF THE INVENTION

Trademarks are indicated herein by capitalization.

The present invention provides coated articles having improved water repellency, oil or stain repellency, and/or other hydrophobic surface effects. The treated articles provide enhanced performance and durability compared to traditional non-fluorinated commercially available treatment agents. The coating materials of the present invention can be derived from bio-sourced materials. The coatings formed are durable, by which is meant that the coatings are lasting films that are not readily removed by water or cleaning agents. In one aspect, the coatings are not soluble or dispersable in water or cleaning agents once they are dry, and in another aspect, the coatings withstand multiple cleanings without loss of performance.

The present invention relates to a coated article according to claim 1 comprising a partial or complete durable coating on the surface of an article, wherein the coating comprises a coating base and 0.1 to 5% by weight of a hydrophobic compound, based on the total solids weight of the coating, selected from a cyclic or acyclic alcohol which is substituted with at least one -R¹, -C(O)R¹, -(CH₂CH₂O)ₙ(CH(CH₃)CH₂O)ₘR²,-(CH₂CH₂O)ₙ(CH(CH₃)CH₂O)ₘC(O)R¹, or mixtures thereof; wherein each n is independently 0 to 20; each m is independently 0 to 20; m+n is greater than 0; each R¹ is independently a linear or branched alkyl group having 5 to 29 carbons optionally comprising at least 1 unsaturated bond; each R² is independently -H, a linear or branched alkyl group having 6 to 30 carbons optionally comprising at least 1 unsaturated bond; and the coating has a thickness of at least 0.1 mils. The -(CH₂CH₂O)-represents oxyethylene groups (EO) and -(CH(CH₃)CH₂O)- represents oxypropylene groups (PO). These compounds can contain only EO groups, only PO groups, or mixtures thereof. These compounds can also be present as a tri-block copolymer designated PEG-PPG-PEG (polyethylene glycol-polypropylene glycol-polyethylene glycol), for example. In one embodiment, n+m is 1 to 20; in another embodiment, n+m is 1 to 15; and in a third embodiment, n+m is 1 to 12.

As used herein, the term "coating base" is a composition that is applied to a substrate for the purpose of creating a lasting film on the substrate surface. Such coating bases include compositions with polymer resins, such as architectural coatings, clear coats, and floor finishes. Architectural coatings may have a dry film thickness of greater than 3 mils. Depending on the system (epoxy, acrylic, latex, urethane, polyurethane, etc.) and the number of coats (including primer, body, and top coat), the final dry film thickness can be much greater, sometimes greater than 30 mils, for protection in industrial applications. In one aspect, the coating has a dry film thickness of at least 0.3 mils.

The hydrophobic compound of the present invention is a compound selected from Formulas (Ia) and (lb) as defined in claim 1. The hydrophobic compound may be a multi-ester alcohol having at least two hydrophobic substitutions, which originates from a polyol or polycarboxylic acid compound. The hydrophobic compounds are substituted with at least one -R¹; -C(O)R¹; -(CH₂CH₂O)ₙ(CH(CH₃)CH₂O)ₘR²; -(CH₂CH₂O)ₙ(CH(CH₃)CH₂O)ₘC(O)R¹; or mixtures thereof. Such a substitution lends hydrophobic character to the monomer, and to the polymer molecules. In one embodiment, the hydrophobic compound is substituted with at least two -R¹;-C(O)R¹; -(CH₂CH₂O)ₙ(CH(CH₃)CH₂O)ₘR²; -(CH₂CH₂O)ₙ(CH(CH₃)CH₂O)ₘC(O)R¹; or mixtures thereof; and in another embodiment, it is substituted with at least three -R¹; -C(O)R¹;-(CH2CH2O)ₙ(CH(CH₃)CH₂O)ₘR²; -(CH₂CH₂O)ₙ(CH(CH₃)CH₂O)ₘC(O)R¹; or mixtures thereof. In general substituted compounds can be made by the reaction of a sugar alcohol (which can be a cyclic or acyclic sugar alcohol) with at least one fatty acid or alkoxylated fatty acid, such as by esterification of a fatty acid; or by esterification of a polycarboxylic acid with a long-chain alcohol. Examples of sugar alcohols include but are not limited to aldoses and ketoses such as those compounds derived from tetroses, pentoses, hexoses, and heptoses. Specific examples include glucose, 1,4-anhydro-D-glucitol, 2,5-anhydro-D-mannitol, 2,5-anhydro-L-iditol, isosorbide, sorbitan, glyceraldehyde, erythrose, arabinose, ribose, arabinose, allose, altrose, mannose, xylose, lyxose, gulose, glactose, talose, fructose, ribulose, mannoheptulose, sedohelptulose, threose, erythritol, threitol, glucopyranose, mannopyranose, talopyranose, allopyranose, altropyranose, idopyranose, gulopyranose, glucitol, mannitol, erythritol, sorbitol, arabitol, xylitol, ribitol, galactitol, fucitol, iditol, inositol, pentaerythritol, dipentaerythritol, volemitol, gluconic acid, glyceric acid, xylonic acid, galactaric acid, ascorbic acid, citric acid, gluconic acid lactone, glyceric acid lactone, xylonic acid lactone, glucosamine, galactosamine, or mixtures thereof.

Suitable fatty acids include, but are not limited to, caprylic acid, capric acid, lauric acid, mysteric acid, palmitic acid, stearic acid, arachidic acid, behenic acid, lignoceric acid, palmitoleic acid, lineolic acid, oleic acid, erucic acid, alkoxylated versions of these acids, and mixtures thereof. In one embodiment, R¹ is a linear or branched alkyl group having 11 to 29 carbons, and in another embodiment, R¹ is a linear or branched alkyl group having 17 to 21 carbons. In one embodiment, R² is a linear or branched alkyl group having 12 to 30 carbons, in another embodiment, R² is a linear or branched alkyl group having 18 to 30 carbons, and in another embodiment, R² is a linear or branched alkyl group having 18 to 22 carbons. In one embodiment, the fatty acid substitution of the cyclic or acyclic sugar alcohols has a melting point of at least -59 °C. In another embodiment, the fatty acid substitution of the cyclic or acyclic sugar alcohols has a melting point of at least 0 °C, and in a third embodiment, the fatty acid substitution of the cyclic or acyclic sugar alcohols has a melting point of at least 40 °C.

According to the present invention the hydrophobic compound is selected from Formulas (Ia) and (Ib): 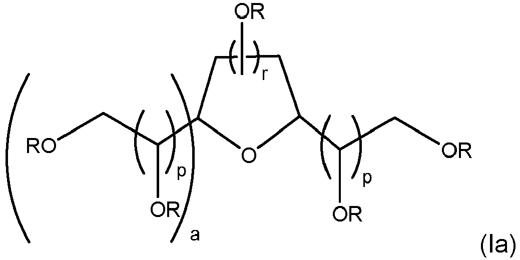 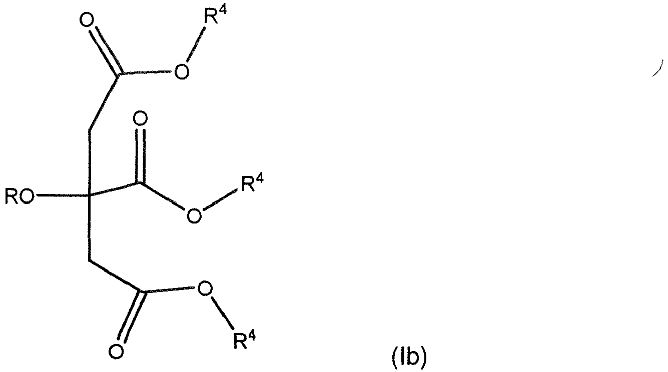
wherein each R is independently -H; -R¹; -C(O)R¹;
-(CH₂CH₂O)ₙ(CH(CH₃)CH₂O)ₘR²; or
-(CH₂CH₂O)ₙ(CH(CH₃)CH₂O)ₘC(O)R¹; each n is independently 0 to 20;
each m is independently 0 to 20; m+n is greater than 0; r is 1 to 3; a is 0 or 1; p is independently 0 to 2; provided that a is 0 when r is 3; each R¹ is independently a linear or branched alkyl group having 5 to 29 carbons optionally comprising at least 1 unsaturated bond; each R² is independently -H, or a linear or branched alkyl group having 6 to 30 carbons optionally comprising at least 1 unsaturated bond; provided when Formula (Ia) is chosen, then at least one R is -H and at least one R is a-R¹; -C(O)R¹; -(CH₂CH₂O)ₙ(CH(CH₃)CH₂O)ₘR²;
or -(CH₂CH₂O)ₙ(CH(CH₃)CH₂O)ₘC(O)R¹; each R⁴ is independently -H, a linear or branched alkyl group having 6 to 30 carbons optionally comprising at least 1 unsaturated bond, or combinations thereof;
-(CH₂CH₂O)ₙ(CH(CH₃)CH₂O)ₘR²; or
-(CH₂CH₂O)ₙ(CH(CH₃)CH₂O)ₘC(O)R¹; provided when Formula (Ib) is chosen, then at least one R or R⁴ is -H; and at least one R or R⁴ is a linear or branched alkyl group optionally comprising at least 1 unsaturated bond, or combinations thereof; -(CH₂CH₂O)n(CH(CH₃)CH₂O)mR²;
or -(CH₂CH₂O)ₙ(CH(CH₃)CH₂O)ₘC(O)R¹.

Where the hydrophobic compound is Formula (Ia), any suitable substituted reduced sugar alcohol may be employed, including esters of 1,4-sorbitan, esters of 2,5-sorbitan, and esters of 3,6-sorbitan. In one embodiment, the hydrophobic compound is selected from Formula (a) to be Formula (Ia'): 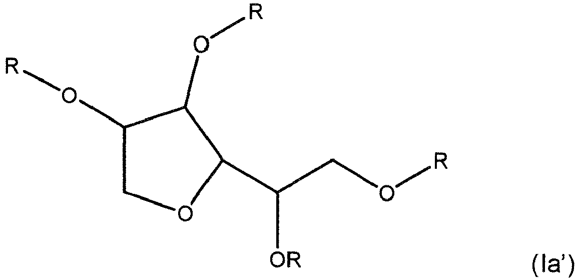 wherein R is further limited to -H; -R¹; or -C(O)R¹ and at least one R is-C(O)R¹ or R¹. Compounds used to form residues of Formula (Ia'), having at least one of R is -H and at least one R is selected from -C(O)R¹, are commonly known as alkyl sorbitans. These sorbitans can be mono-substituted, di-substituted, or tri-substituted with -C(O)R¹. It is known that commercially available sorbitans, such as SPAN, contain a mixture of the various sorbitans ranging from where each R is H (un-substituted), and sorbitans where each R is -C(O)R¹ (fully substituted); wherein R¹ is a linear or branched alkyl group having 5 to 29 carbons; and mixtures of various substitutions thereof. The commercially available sorbitans may also include amounts of sorbitol, isosorbide, or other intermediates or byproducts.

In one embodiment, at least one R is -C(O)R¹, and R¹ is a linear branched alkyl group having 5 to 29 carbons. In another embodiment, R¹ is a linear or branched alkyl group having 7 to 21 carbons, and in a third embodiment, R¹ is a linear or branched alkyl group having 11 to 21 carbons. Preferred compounds used to form these residues include mono-, di-, and tri-substituted sorbitans derived from caprylic acid, capric acid, lauric acid, mysteric acid, palmitic acid, stearic acid, arachidic acid, behenic acid, lignoceric acid, and mixtures thereof. Particularly preferred compounds include mono-, di-, and tri-substituted sorbitan stearates or sorbitan behenins.

Optionally, R¹ is a linear or branched alkyl group having 5 to 29 carbons comprising at least 1 unsaturated bond. Examples of compounds of Formula (Ia) wherein at least one R is selected from-C(O)R¹; and R¹ contains least 1 unsaturated bond, include, but are not limited to, sorbitan trioleate (i.e., wherein R¹ is -C₇H₁₄CH=CHC₈H₁₇). Other examples but are not limited to include mono-, di-, and tri-substituted sorbitans derived from palmitoleic acid, lineolic acid, arachidonic acid, and erucic acid.

In one embodiment, a compound of Formula (Ia) is employed, wherein at least one R is independently -(CH₂CH₂O)ₙ(CH(CH₃)CH₂O)ₘR² or -(CH₂CH₂O)ₙ(CH(CH₃)CH₂O)ₘC(O)R¹. Compounds of Formula (Ia), wherein at least one R is -(CH₂CH₂O)ₙ(CH(CH₃)CH₂O)ₘR² or -(CH₂CH₂O)ₙ(CH(CH₃)CH₂O)ₘC(O)R¹, wherein each m is independently 0 to 20, each n is independently 0 to 20, and n+m is greater than 0 are known as polysorbates and are commercially available under the tradename TWEEN. These polysorbates can be mono-substituted, di-substituted, or tri-substituted with alkyl groups R¹ or R². It is known that commercially available polysorbates, contain a mixture of the various polysorbates ranging from where each R² is H (unsubsituted), and polysorbates where each R¹ is a linear or branched alkyl group having 5 to 29 carbons (fully substituted); and mixtures of various substitutions thereof. Examples of compounds of Formula (Ia) include polysorbates such as polysorbate tristearate and polysorbate monostearate. Examples of compounds of Formula (Ia) wherein m+n is greater than 0, and wherein R¹ comprises at least 1 unsaturated bond, but not limited to, polysorbate trioleate (wherein R¹ is C₇H₁₄CH=CHC₈H₁₇) and are sold commercially under the name Polysorbate 80. Reagents may include mixtures of compounds having various values for R, R¹, and R², and may also include mixtures of compounds where R¹ comprises at least one unsaturated bond with compounds where R¹ is fully saturated.

Compounds of Formula (Ib) are known as alkyl citrates. These citrates can be present as a mono-substituted, di-substituted, or tri-substituted with alkyl groups. It is known that commercially available citrates contain a mixture of the various citrates as well as citric acids from where R and each R⁴ is -H, ranging to citrates where each R⁴ is a linear or branched alkyl group having 6 to 30 carbons optionally comprising at least 1 unsaturated bond; and mixtures of various substitutions thereof. Mixtures of citrates having various values for R¹, R², and R⁴ may be used, and may also include mixtures of compounds where R¹ comprises at least one unsaturated bond with compounds where R¹ is fully saturated. Alkyl citrates are also commercially available wherein m+n is greater than 0, R⁴ is -(CH₂CH₂O)ₙ(CH(CH₃)CH₂O)ₘR²; or -(CH₂CH₂O)ₙ(CH(CH₃)CH₂O)ₘC(O)R¹ and are present in the various substitutions from wherein Rand each R² is H to wherein each R¹ and/or R² is a linear or branched alkyl group having 5 to 30 carbons optionally comprising at least 1 unsaturated bond. Examples of compounds of Formula (Ib) include, but are not limited to, trialkyl citrates.

Compounds of Formulas (Ia) and (Ib) can all be bio-based derived. By "bio-based derived", it is meant that at least 10% of the material can be produced from non-crude oil sources, such as plants, other vegetation, and tallow. In one embodiment, the hydrophobic compound is from about 10% to 100% bio-based derived. In one embodiment, hydrophobic compound is from about 35% to 100% bio-based derived. In another embodiment, hydrophobic compound is from about 50% to 100% bio-based derived. In one embodiment, hydrophobic compound is from about 75% to 100% bio-based derived. In one embodiment, hydrophobic compound is 100% bio-based derived. The average OH value of the hydrophobic compounds can range from just greater than 0 to about 230. In one embodiment, the average OH value is from about 10 to about 175, and in another embodiment, the average OH value is from about 25 to about 140.

The coating on the article surface comprises 0.1 to 5% by weight of the hydrophobic compound, based on the total solids weight of the coating. In a second aspect, the coating on the article surface comprises 0.2 to 5% by weight of the hydrophobic compound; and in a third aspect, 0.25 to 2% by weight of the hydrophobic compound based on the total solids weight of the coating. The term "solids weight of the coating", is used to mean the sum of the coating components that would remain once the aqueous, solvent, or other liquid components evaporated. In other words, it is the sum of the non-aqueous, non-solvent, and non-volatile components of the coating. The coating may further comprise aqueous or organic solvents, polymer resins, coating bases that contain polymer resins, pigments, functional additives, surfactants, and hydrophobic surface effect agents.

When the coating is in the form of a paint, stain, or sealer, the coating further comprises a coating base. In one embodiment, the the coating base is selected from the group consisting of an acrylic polymer, epoxy polymer, vinyl polymer, and polyurethane polymer in the form of an inerior house paint, exterior house paint, stain, or clear coating. Such paints, usually comprising a polymer resin, a liquid carrier, and functional additives, are readily available in the marketplace under a number of major brands. Such coatings may be unpigmented or may be pigmented with compounds including but not limited to titanium dioxide.

In another embodiment, the coating base is a floor finish, polishing agent, or floor polish. Floor waxes, polishes, or finishes are generally water-based or solvent-based polymer emulsions. Commercially available floor finish compositions typically are aqueous emulsion-based polymer compositions comprising one or more organic solvents, plasticizers, coating aides, anti-foaming agents, surfactants, polymer emulsions, metal complexing agents, and waxes. The particle size range and solids content of the polymer are usually controlled to control the product viscosity, film hardness and resistance to deterioration. Polymers containing polar groups function to enhance solubility and may also act as wetting or leveling agents providing good optical properties such a high gloss and distinctness of reflected image.

In one embodiment, the coating base is a clearcoat. Such clearcoat compositions, which can be used to coat metal substrates, contain a polymer composition such as an epoxy polymer resin composition. One type of epoxy resin composition is described in US2015/0344748. Such compositions may be fluorinated or nonfluorinated, and may contain one or more curing agents, fillers, lubricants, anti-dripping agents, flame retardant agents, mold release agents, nucleating agents, colorants, UV stabilizers, solvents, or catalysts.

Preferred polymers for use in floor finishes include acrylic polymers, polymers derived from cyclic ethers, and polymers derived from vinyl substituted aromatics. Polyesters, polyamides, polyurethanes and polysiloxanes are also used in floor finishes. The waxes or mixtures of waxes that are used in floor finishes include waxes of a vegetable, animal, synthetic, and/or mineral origin. Representative waxes include, for example, carnuba, candelilla, lanolin, stearin, beeswax, oxidized polyethylene wax, polyethylene emulsions, polypropylene, copolymers of ethylene and acrylic esters, hydrogenerated coconut oil or soybean oil, and the mineral waxes such as paraffin or ceresin. The waxes typically range from 0 to about 15 weight percent and preferably from about 2 to about 10 weight percent based on the weight of the finish composition.

When the coating composition is a floor finish, floor wax, or floor polish, the hydrophobic compounds of the present invention are effectively introduced to the coating composition by thoroughly stirring it in at room or ambient temperature. More elaborate mixing can be employed such as using a mechanical shaker or providing heat or other methods.

In one embodiment, the hydrophobic compound is combined with a surface effect agent to extend or improve the performance of the surface effect agent. In this case, the hydrophobic surface effect agents may be used from about 5:95 to 95:5 in one aspect; from about 10:90 to 90:10 in a second aspect; and from about 20:80 to 80:20 in a third aspect, based on the total solids weight of the coating. Hydrophobic surface effect agents provide surface effects such as moisture control, strength, anti-slip, anti-static, anti-snag, anti-pill, stain repellency, stain release, soil repellency, soil release, water repellency, oil repellency, odor control, antimicrobial, sun protection, anti-blocking, cleanability, dust resistance, leveling, corrosion resistance, acid resistance, anti-fog, or anti-ice, and similar effects. Such materials can be in the form of hydrophobic non-fluorinated cationic acrylic polymers, hydrophobic non-fluorinated anionic acrylic polymers, hydrophobic non-fluorinated nonionic acrylic polymers, partially fluorinated urethanes, hydrophobic non-fluorinated urethanes, cationic partially fluorinated acrylic polymers or copolymers, nonionic partially fluorinated acrylic polymers or copolymers, partially fluorinated acrylamide polymers or copolymers, fluorinated phosphates, fluorinated ethoxylates, fluorinated or non-fluorinated organosilanes, silicones, waxes, including parafins, and mixtures thereof. Some stain release and soil release agents are hydrophilic and include compounds such as polymethyl acrylates or hydrophilic urethanes. These compounds may also be used as surface effect agents and combined with the hydrophobic compounds, from about 5:95 to 95:5 in one aspect; from about 10:90 to 90:10 in a second aspect; and from about 20:80 to 80:20 in a third aspect, based on the total solids weight of the coating.

Superior properties, along with desirable properties of low yellowing and good durability, are imparted to articles by the combination of the hydrophobic compounds to hydrophobic surface effect agents before application to the articles. These combined blends are applied to the articles in the form of a dispersion in water or other solvent either before, after or during the application of other treatment chemicals.

Of particular interest are fluorinated polymers useful as hydrophobic surface effect agents to provide repellency properties to the surface of treated substrates. These include fluorochemical compounds or polymers containing one or more fluoroaliphatic groups (designated here as Rf groups) which are fluorinated, stable, inert, and non-polar, preferably saturated, monovalent, and both oleophobic and hydrophobic. The Rf groups contain at least 3 carbon atoms, preferably 3 to 20 carbon atoms, more preferably 4 to 12 carbon atoms, and most preferably about 4 to about 6 carbon atoms. The Rf groups may contain straight or branched chain or cyclic fluorinated alkylene groups or combinations thereof. The terminal portion of the Rf groups is preferably a perfluorinated aliphatic group of the formula CₙF₂ₙ₊₁ wherein n is from about 3 to about 20. Examples of fluorinated polymer treating agents are CAPSTONE and ZONYL available from The Chemours Company, Wilmington, DE; ASAHI GARD from Asahi Glass Company, Ltd., Tokyo, Japan; UNIDYNE from Daikin America, Inc., Orangeburg, NY; SCOTCHGARD from 3M Company, St. Paul, MN; and NANO TEX from Nanotex, Emeryville, CA.

Examples of such fluorinated polymers include Rf-containing polyurethanes and poly(meth)acrylates. Especially preferred are copolymers of fluorochemical (meth)acrylate monomers with a copolymerizable monovinyl compound or a conjugated diene. The copolymerizable monovinyl compounds include alkyl (meth)acrylates, vinyl esters of aliphatic acids, styrene and alkyl styrene, vinyl halides, vinylidene halides, alkyl esters, vinyl alkyl ketones, and acrylamides. The conjugated dienes are preferably 1,3-butadienes. Representative compounds within the preceding classes include the methyl, propyl, butyl, 2-hydroxypropyl, 2-hydroxyethyl, isoamyl, 2-ethylhexyl, octyl, decyl, lauryl, cetyl, and octadecyl acrylates and methacrylates; vinyl acetate, vinyl propionate, vinyl caprylate, vinyl laurate, vinyl stearate, styrene, alpha methyl styrene, p-methylstyene, vinyl fluoride, vinyl chloride, vinyl bromide, vinylidene fluoride, vinylidene chloride, allyl heptanoate, allyl acetate, allyl caprylate, allyl caproate, vinyl methyl ketone, vinyl ethyl ketone, 1,3-butadiene, 2-chloro-1,3-butadiene, 2,3-dichloro-1,3-butadiene, isoprene, N-methylolacrylamide, N-methylolmethacrylamide, glycidyl acrylate, glycidyl methacrylate, amine-terminated (meth)acrylates, and polyoxy(meth)acrylates.

Hydrophobic non-fluorinated acrylic polymers include copolymers of monovinyl compounds, including alkyl (meth)acrylates, vinyl esters of aliphatic acids, styrene and alkyl styrene, vinyl halides, vinylidene halides, alkyl esters, vinyl alkyl ketones, and acrylamides. The conjugated dienes are preferably 1,3-butadienes. Representative compounds within the preceding classes include the methyl, propyl, butyl, 2-hydroxypropyl, 2-hydroxyethyl, isoamyl, 2-ethylhexyl, octyl, decyl, lauryl, cetyl, and octadecyl acrylates and methacrylates; vinyl acetate, vinyl propionate, vinyl caprylate, vinyl laurate, vinyl stearate, styrene, alpha methyl styrene, p-methylstyene, vinyl fluoride, vinyl chloride, vinyl bromide, vinylidene fluoride, vinylidene chloride, allyl heptanoate, allyl acetate, allyl caprylate, allyl caproate, vinyl methyl ketone, vinyl ethyl ketone, 1,3-butadiene, 2-chloro-1,3-butadiene, 2,3-dichloro-1,3-butadiene, isoprene, N-methylolacrylamide, N-methylolmethacrylamide, glycidyl acrylate, glycidyl methacrylate, amine-terminated (meth)acrylates, and polyoxy(meth)acrylates.

Hydrophobic non-fluorinated urethanes include, for example, urethanes synthesized by reacting an isocyanate compound with the hydrophobic compounds described above as an alcohol reagent. These compounds are described in US2014/0295724 and US2016/0090508. Hydrophobic non-fluorinated nonionic acrylic polymers include, for example, polymers made by polymerizing or copolymerizing an acrylic ester of the hydrophobic compounds described above. Such compounds are described in US2016/0090686.

The coating composition of the present invention optionally further comprises additional components such as additional treating agents or finishes to achieve additional surface effects, or additives commonly used with such agents or finishes. One or more such treating agents or finishes can be combined with the blended composition and applied to the article. Other additives commonly used with such treating agents or finishes may also be present such as surfactants, pH adjusters, cross linkers, wetting agents, and other additives known by those skilled in the art. Further, other extender compositions are optionally included to obtain a combination of benefits.

The present invention further comprises a method according to claim 13 of imparting a surface effect to an article comprising contacting a the surface of the article with a durable coating to form a partially or completely coated article, wherein the coating comprises a coating base and 0.1 to 5% by weight of a hydrophobic compound, based on the total solids weight of the coating, selected from a cyclic or acyclic alcohol which is substituted with at least one -R¹, -C(O)R¹, -(CH₂CH₂O)n(CH(CH₃)CH₂O)mR²,-(CH₂CH₂O)n(CH(CH₃)CH₂O)mC(O)R¹, or mixtures thereof; wherein each n is independently 0 to 20; each m is independently 0 to 20; m+n is greater than 0; each R¹ is independently a linear or branched alkyl group having 5 to 29 carbons optionally comprising at least 1 unsaturated bond; each R² is independently -H, a linear or branched alkyl group having 6 to 30 carbons optionally comprising at least 1 unsaturated bond; and the coating has a thickness of at least 0.1 mils.

The articles may include but are not limited to a unglazed concrete, brick, tile, metal, granite, limestone, marble, grout, mortar, statuary, monument, wood, composite material, terrazzo, gypsum board, wall or ceiling panel, glass, or a combination thereof, or a combination thereof. The contacting step may occur by applying the hydrophobic compound by liquid carrier with the coating base. When applied by liquid carrier, the hydrophobic compound may be in the form of an aqueous solution, aqueous dispersion, organic solvent solution or dispersion, or cosolvent solution or dispersion. The contacting step may occur by any conventional method, including but not limited to spraying, rolling, dip-squeeze, brushing, sprinkling, dripping, powder coating, tumbling, or screen printing.

In one aspect, the method further comprises the step of heating the partially or completely coated article. For example, the hydrophobic agent may be applied, and the treated article may be heated to melt, flow, dry, or otherwise fix the hydrophobic agent onto the article surface. The final coating on the article surface will be a solidified, lasting, permanent coating. In another aspect, the method further comprises the step of solidifying the coating by drying, cooling, or allowing to cool. The liquid carrier may be dried by heating or air drying to allow for evaporation of the liquid carrier, thus leaving a permanent solid coating.

Specifically, the treated articles of the present invention are useful to provide enhanced surface properties, especially durability of oil-, water- and soil-repellency, while reducing or eliminating the amount of fluorinated compounds employed. The repellency property is effective with a variety of other surface effects.

### Test Methods and Materials

All solvents and reagents, unless otherwise indicated, were purchased from Sigma-Aldrich, St. Louis, MO, and used directly as supplied. Methyl isobutyl ketone (MIBK) is also available from Sigma-Aldrich, St. Louis, MO.

Sorbitan tristearate and sorbitan trioleate are commercially available from Croda, East Yorkshire, England, or DuPont Nutrition & Health, Copenhagen, Denmark.

Behenyl 50 and lauryl sorbitan are available from DuPont Nutrition & Health, Copenhagen, Denmark.

CHEMIDEX S is a stearaminopropyl dimethylamine surfactant available from Lubrizol, Wickliffe, Ohio.

ETHAL LA-4 is an ethoxylated emulsifier available from Ethox Chemicals, Greenville, South Carolina.

CAPSTONE FS-81, FS-87, and 1470 are fluorinated cleanability agents or surfactants available from The Chemours Company, Wilmington, DE.

Witco C-6094 and WAQE are available from AkzoNobel, Amsterdam, Netherlands.

The following test methods and materials were used in the examples herein.

### Test Methods

Dosing of Polymer Additives in Paint and Test Panel Application

Hydrophobic compounds of the present invention are added to selected commercially available interior and exterior latex paints that are, prior to dosing, free of fluoroadditives. The sample is mixed using an overhead Cowles Blade stirrer at 600 rpm for 10 minutes. The mixture is then transferred to a glass bottle, sealed and placed on a roll mill overnight to allow uniform mixing of the fluoropolymer. The samples are then drawn down uniformly on a black Leneta Mylar® card (5.5" x 10") or Aluminium Q-panel (4" x 12") via a BYK-Gardner drawdown apparatus using 5 mL bird-applicator, to yield a wet paint film with a film thickness of 5 mils. The paint films are then allowed to dry at room temperature for 7 days to yield dry paint films with a film thickness of about 2.5 mils.

### Test Method 1. Evaluation of Water and Oil Repellency via Contact Angle Measurement

Water and oil contact angle measurements are used to test for the migration of fluoroadditive to the surface of the paint film. Testing is performed by goniometer on 1 inch strips of Leneta panel coated with dried paint film. A Ramé-Hart Standard Automated Goniometer Model 200 employing DROPimage standard software and equipped with an automated dispensing system, 250 µl syringe, and illuminated specimen stage assembly is used. The goniometer camera is connected through an interface to a computer, allowing the droplet to be visualized on a computer screen. The horizontal axis line and the cross line can both be independently adjusted on the computer screen using the software. Prior to contact angle measurement, the sample is placed on the sample stage and the vertical vernier is adjusted to align the horizontal line (axis) of the eye piece coincident to the horizontal plane of the sample. The horizontal position of the stage relative to the eye piece is positioned so as to view one side of the test fluid droplet interface region at the sample interface.

To determine the contact angle of the test fluid on the sample, approximately one drop of test fluid is dispensed onto the sample using a 30 µL pipette tip and an automated dispensing system to displace a calibrated amount of the test fluid. For oil contact angle measurements, hexadecane is suitably employed, and deionized water is used for water contact angle measurements. Horizontal and cross lines are adjusted via the software in case of the Model 200 after leveling the sample via stage adjustment, and the computer calculates the contact angle based upon modeling the drop appearance. The initial contact angle is the angle determined immediately after dispensing the test fluid to the sample surface. Initial contact angles above 30 degrees are indicators of effective oil repellency.

### Test Method 2. Leneta Oil Stain Cleanability for Interior Paints

A modified version of ASTMD3450 is used to determine the oil stain cleanability of painted panels. The test material dosed in interior flat paint is applied to a black Leneta card as decribed in the application method. The dried samples are cut into a 4" x 3" size for testing. A thin, evenly laid layer of Leneta staining medium (5 wt.% dispersion of Leneta carbon black in Vaseline®) is placed on half of the film, and left for 1 hour. The excess stain is gently scrapped off and wiped with a clean paper towel until no visible stain can be wiped off. The panel is then moved to an Gardco abrasion tester covered with 8 layers of cheese cloth at the washing block. The cheesecloth is moisturized with 10 mL of 1% mild detergent solution in water and performs washability via moving the washing block over the stained panel. After 5 cycles, the panel is rinsed with deionized water and left to dry for 12 hours. The whiteness of the unwashed stained paint and washed stained paint are measured using a Hunter lab colorimeter to obtain L values. Cleanability is calculated as per the equation: Cleanability = (L_{washed paint} - _{Lunwashed stained paint}) x 10/(_{Lunstained paint} - L_{unwashed stained paint}). Similarly a cleanability rating for a control sample that is devoid of fluorinated additive is acessed simultaneously. The difference between the cleanability rating of the sample to the control are determined and represented as a cleanability score ΔC. The higher the ΔC the better the performance, suggesting that relatively lower amounts of stain remains on the treated sample compared to control. A negative ΔC indicates that the sample is worse than the control.

### EXAMPLES

### Comparative Example A

Paint was tested without any hydrophobic additive, according to the test methods above.

### Comparative Example B

A 100-g paint sample was blended with 0.59 g of CAPSTONE FS-81 according to the dosing procedure above and tested according to the test methods above.

### Comparative Example C

A 100-g paint sample was blended with 0.1 g of CAPSTONE FS-87 according to the dosing procedure above and tested according to the test methods above.

### Comparative Example D

A 100-g paint sample was blended with 0.13 g of CAPSTONE 1470 according to the dosing procedure above and tested according to the test methods above.

### Example 1

Into a 4-neck round bottom flask equipped with an overhead stirrer, thermocouple and condenser is added sorbitan tristearate (111 g) and 4-methyl-2-pentanone (MIBK, 274 g). The solution is heated to 80 °C. An aqueous dispersion is then prepared by adding warm water (512 g), CHEMIDEX S (2.4 g), ETHAL LA-4 (3.2 g) and acetic acid (1.6 g) at 65 °C. The mixture is immersion blended (2 min), homogenized at 6000 psi, and the resulting dispersion is distilled under reduced pressure to remove the solvent and yield a non-flammable dispersion at 13.15% solids after cooling and filtering. The product is dosed into paint such that the sorbitan tristearate composes 1% by weight of the sample and tested according to the test methods above.

### Example 2

Example 1 is repeated, except 0.59 g of CAPSTONE FS-81 is added to the 100-g paint sample and mixed according to the dosing procedure above. The resulting paint is tested according to the test methods above.

### Example 3

Into a 4-neck round bottom flask equipped with an overhead stirrer, thermocouple and condenser is added sorbitan tristearate (80 g) and MIBK (200 g). The solution is heated to 70 °C. An aqueous dispersion is then prepared by adding warm water (225 g), CHEMIDEX S (1.7 g), ETHAL LA-4 (2.3 g), acetic acid (1.2 g), and dipropylene glycol (19.7 g) at 65 °C. The mixture is immersion blended (2 min), homogenized at 6000 psi, and the resulting dispersion is distilled under reduced pressure to remove the solvent and yield a non-flammable dispersion at 10.73% solids after cooling and filtering. The product is dosed into paint such that the sorbitan tristearate composes 1% by weight of the sample and tested according to the test methods above.

### Example 4

Example 2 is repeated, except 0.59 g of CAPSTONE FS-81 is added to the 100-g paint sample and mixed according to the dosing procedure above. The resulting paint is tested according to the test methods above.

### Example 5

Example 1 is repeated, except 0.1 g of CAPSTONE FS-87 is added to the 100-g paint sample and mixed according to the dosing procedure above. The resulting paint is tested according to the test methods above.

### Example 6

Example 1 is repeated, except 0.13 g of CAPSTONE 1470 is added to the 100-g paint sample and mixed according to the dosing procedure above. The resulting paint is tested according to the test methods above.

### Example 7

Into a 4-neck round bottom flask equipped with an overhead stirrer, thermocouple and condenser was added sorbitan tristearate (60.1 g) and MIBK (150 g). After the solution was heated to 55 °C. An aqueous dispersion was then prepared by adding warm water (299 g), Witco C-6094 (7.6 g) and dipropylene glycol (14.8 g) at 65 °C. The mixture was immersion blended (2 min), homogenized at 6000 psi, and the resulting dispersion was distilled under reduced pressure to remove the solvent and yield a non-flammable urethane dispersion at 12.56% solids after cooling and filtering. The product is dosed into paint such that the sorbitan tristearate composes 1% by weight of the sample and tested according to the test methods above.

### Example 8

Example 7 is repeated, except 0.59 g of CAPSTONE FS-81 is added to the 100-g paint sample and mixed according to the dosing procedure above. The resulting paint is tested according to the test methods above.

### Example 9

Example 7 is repeated, except 0.1 g of CAPSTONE FS-87 is added to the 100-g paint sample and mixed according to the dosing procedure above. The resulting paint is tested according to the test methods above.

### Example 10

Example 7 is repeated, except 0.13 g of CAPSTONE 1470 is added to the 100-g paint sample and mixed according to the dosing procedure above. The resulting paint is tested according to the test methods above.

**Table 1. Performance of Examples 1-10**

| Example | Cleanability Rating | Water Contact Angle | Hexadecane Contact Angle |
|---|---|---|---|
| A | 2.3 | 65.4 | 0 |
| B | 4.6 | 48.8 | 73.2 |
| C | 1.6 | 59.3 | 14.3 |
| D | 4.5 | 0 | 76.6 |
| 1 | 6.8 | 88.6 | 4.6 |
| 2 | 4.3 | 65.4 | 75.4 |
| 5 | 2.4 | 88.7 | 35.5 |
| 6 | 3.3 | 49.4 | 62.4 |
| 7 | 6.9 | 86.7 | 37.6 |
| 8 | 5.5 | 78.9 | 71.5 |
| 9 | 3.0 | 74.8 | 49.8 |
| 10 | 2.7 | 78.6 | 57.1 |

### Comparative Example E

A 100-g paint sample was dosed with CAPSTONE FS-81 to form a composition at 0.2% by weight of CAPSTONE FS-81. The dosed paint was tested according to the test methods above.

### Examples 11-14

Example 1 is repeated, using the percentage of sorbitan tristearate shown in Table 2. Examples 12 and 14 also contain 0.59 g of CAPSTONE FS-81 added to the 100-g paint sample. The resulting paints are tested according to the test methods above.

### Examples 15-18

Example 7 is repeated, using the percentage of sorbitan tristearate shown in Table 2. Example 16 and 18 also contain 0.59 g of CAPSTONE FS-81 added to the 100-g paint sample. The resulting paints are tested according to the test methods above.

**Table 2. Performance of Examples 11-18**

| Example | Amount of Sorbitan Tristearate (% by weight) | Cleanability Rating | Water Contact Angle | Hexadecane Contact Angle |
|---|---|---|---|---|
| E | 0 | 2.5 | 0 | 84 |
| 11 | 0.2 | 3.2 | 72.7 | 0 |
| 12 | 0.2 | 4.5 | 0 | 83.4 |
| 13 | 0.5 | 3.1 | 78.6 | 0 |
| 14 | 0.5 | 4.4 | 0 | 82.2 |
| 15 | 0.2 | 4.3 | 67.2 | 18.7 |
| 16 | 0.2 | 3.4 | 0 | 82 |
| 17 | 0.5 | 4.1 | 64 | 45.7 |
| 18 | 0.5 | 3.0 | 25 | 85.9 |

### Example 19

Into a 4-neck round bottom flask equipped with an overhead stirrer, thermocouple and condenser was added sorbitan tristearate (60.1 g) and MIBK (150 g). The solution was heated to 55 °C. An aqueous dispersion was then prepared by adding warm water (383 g), WAQE (11.4 g) and dipropylene glycol (14.8 g) at 65 °C. The mixture was immersion blended, homogenized at 6000 psi, and the resulting dispersion was distilled under reduced pressure to remove the solvent and yield a non-flammable urethane dispersion at 12.91 % solids after cooling and filtering. The product is dosed into paint such that the sorbitan tristearate composes 1% by weight of the sample and tested according to the test methods above.

### Example 20

Example 19 is repeated, except 0.59 g of CAPSTONE FS-81 is added to the 100-g paint sample and mixed according to the dosing procedure above. The resulting paint is tested according to the test methods above.

### Example 21

A 4-neck 500 mL round bottom flask was set-up with an additional funnel, thermocouple, mechanical stirrer, nitrogen inlet, condenser, and gas outlet. The flask was charged with Behenyl 50 (30 g) and MIBK (75 g). The mixture was heated to 75 °C and Behenyl 50 dissolved. In a separate flask, hot DI water (280. 5 g), WAQE (5.69 g) and dipropylene glycol (7.33 g) were mixed and added to the flask with Behenyl 50. The mixture was stirred for 30 minutes at 75 °C and then homogenized at 6000 psi. The final product was distilled to remove MIBK and filtered through a sock filter to yield a product at 13 % solids. The product is dosed into paint such that the Behenyl 50 composes 1% by weight of the sample and tested according to the test methods above.

### Example 22

Example 21 is repeated, except 0.59 g of CAPSTONE FS-81 is added to the 100-g paint sample and mixed according to the dosing procedure above. The resulting paint is tested according to the test methods above.

### Example 23

A 4-neck round bottom flask was set-up with an additional funnel, thermocouple, mechanical stirrer, nitrogen inlet, condenser, and gas outlet. The flask was charged with lauryl sorbitan (30 g) and MIBK (75 g). The mixture was heated to 75 °C. In a separate flask, hot DI water (280.5 g), WAQE (5.69 g) and dipropylene glycol (7.33 g) were mixed and added to the flask with lauryl sorbitan. The mixture was stirred for 30 minutes at 75 °C and then homogenized at 6000 psi. The final product was distilled to remove MIBK and filtered through a sock filter to yield a product at 20 % solids. The product is dosed into paint such that the lauryl sorbitan composes 1% by weight of the sample and tested according to the test methods above.

### Example 24

Example 23 is repeated, except 0.59 g of CAPSTONE FS-81 is added to the 100-g paint sample and mixed according to the dosing procedure above. The resulting paint is tested according to the test methods above.

### Example 25

Into a 4-neck round bottom flask equipped with an overhead stirrer, thermocouple and condenser was added sorbitan trioleate (60.3 g) and MIBK (150 g). The solution was heated to 55 °C. An aqueous dispersion was then prepared by adding warm water (429 g), WAQE (11.4 g) and dipropylene glycol (14.8 g) at 65 °C. The mixture was immersion blended (2 min), homogenized at 6000 psi, and the resulting dispersion was distilled under reduced pressure to remove the solvent and yield a non-flammable urethane dispersion at 14.44% solids after cooling and filtering. The product is dosed into paint such that the sorbitan trioleate composes 1% by weight of the sample and tested according to the test methods above.

### Example 26

Example 25 is repeated, except 0.59 g of CAPSTONE FS-81 is added to the 100-g paint sample and mixed according to the dosing procedure above. The resulting paint is tested according to the test methods above.

**Table 3. Performance of Examples 19-22**

| Example | Cleanability Rating | Water Contact Angle | Hexadecane Contact Angle |
|---|---|---|---|
| 19 | 1.9 | 89 | 53.2 |
| 20 | 2.0 | 46.6 | 74.8 |
| 21 | 4.2 | 53.7 | 47 |
| 22 | 3.2 | 42.7 | 81.9 |
| 23 | 2.1 | 85 | 0 |
| 24 | 2.6 | 0 | 80.2 |
| 25 | 0.2 | 71 | 0 |
| 26 | 0.6 | 16.6 | 89.5 |

## Claims

1. A coated article comprising a partial or complete durable coating on the surface of an article,
wherein the coating comprises a coating base and 0.1 to 5% by weight of a hydrophobic compound, based on the total solids weight of the coating, selected from a cyclic or acyclic alcohol which is substituted with at least one -R¹, -C(O)R¹, -(CH₂CH₂O)n(CH(CH₃)CH₂O)mR²,-(CH₂CH₂O)ₙ(CH(CH₃)CH₂O)ₘC(O)R¹, or mixtures thereof;
wherein
each n is independently 0 to 20;
each m is independently 0 to 20;
m+n is greater than 0;
each R¹ is independently a linear or branched alkyl group having 5 to 29 carbons optionally comprising at least 1 unsaturated bond;
each R² is independently -H, a linear or branched alkyl group having 6 to 30 carbons optionally comprising at least 1 unsaturated bond; and
the coating has a thickness of at least 0.1 mils,
where the hydrophobic compound is selected from Formulas (Ia), or (Ib): 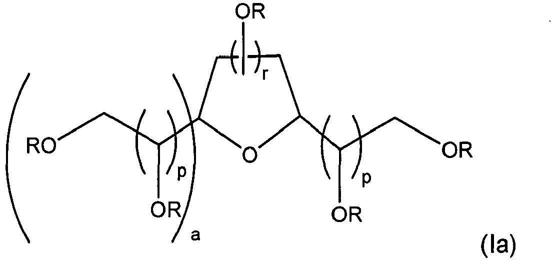 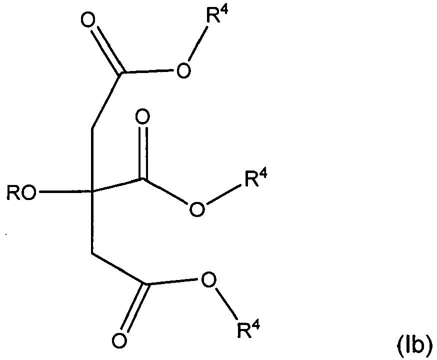
wherein each R is independently -H; -R¹; -C(O)R¹; -(CH₂CH₂O)ₙ(CH(CH₃)CH₂O)ₘR²; or -(CH₂CH₂O)ₙ(CH(CH₃)CH₂O)ₘC(O)R¹;
r is 1 to 3;
a is 0 or 1;
p is independently 0 to 2;
provided that a is 0 when r is 3;
and wherein each n, each m, m+n, each R¹ and each R² are as defined above;
provided when Formula (Ia) is chosen, then at least one R is -H and at least one R is a -R¹; -C(O)R¹; -(CH₂CH₂O)ₙ(CH(CH₃)CH₂O)ₘR²; or -(CH₂CH₂O)ₙ(CH(CH₃)CH₂O)ₘC(O)R¹;
each R⁴ is independently -H, a linear or branched alkyl group having 6 to 30 carbons optionally comprising at least 1 unsaturated bond, or combinations thereof; -(CH₂CH₂O)ₙ(CH(CH₃)CH₂O)ₘR²; or -(CH₂CH₂O)ₙ(CH(CH₃)CH₂O)ₘC(O)R¹;
provided when Formula (Ib) is chosen, then at least one R or R⁴ is -H; and at least one R or R⁴ is a linear or branched alkyl group optionally comprising at least 1 unsaturated bond, or combinations thereof; -(CH₂CH₂O)ₙ(CH(CH₃)CH₂O)ₘR²;
or -(CH₂CH₂O)ₙ(CH(CH₃)CH₂O)ₘC(O)R¹.

2. The coated article of claim 1, where the hydrophobic compound is selected from Formula (Ia) to be Formula (Ia'): 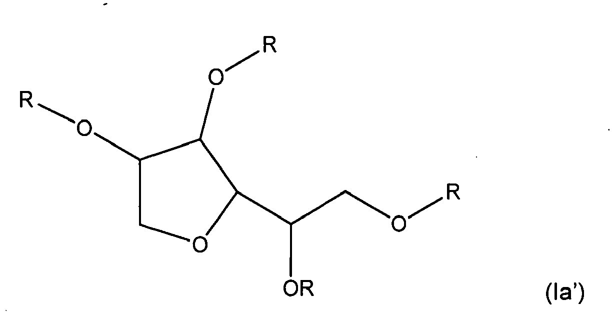 wherein R is further limited to independently -H; -R¹; or -C(O)R¹.

3. The coated article of claim 1, where the hydrophobic compound is selected from Formula (Ia) to be Formula (Ia'): 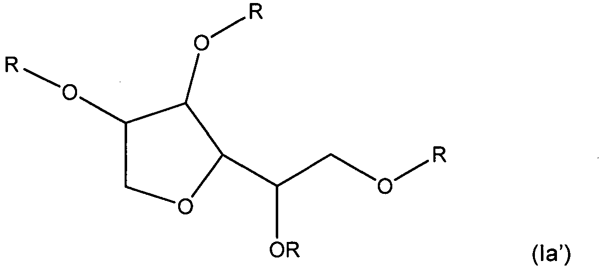 wherein R is further limited to independently -H; -(CH₂CH₂O)ₙ(CH(CH₃)CH₂O)ₘR²; or -(CH₂CH₂O)ₙ(CH(CH₃)CH₂O)ₘC(O)R¹.

4. The coated article of claim 1, where the hydrophobic compound is selected from Formula (lb).

5. The coated article of claim 1, where the hydrophobic compound is substituted with at least two -R¹, -C(O)R¹,-(CH₂CH₂O)ₙ(CH(CH₃)CH₂O)ₘR², -(CH₂CH₂O)ₙ(CH(CH₃)CH₂O)ₘC(O)R¹, or mixtures thereof.

6. The coated article of claim 1, where the coating further comprises a hydrophobic surface effect agent.

7. The coated article of claim 6, wherein the surface effect is moisture control, strength, anti-slip, anti-static, anti-snag, anti-pill, stain repellency, stain release, soil repellency, soil release, water repellency, oil repellency, odor control, antimicrobial, sun protection, anti-blocking, cleanability, dust resistance, leveling, corrosion resistance, acid resistance, anti-fog, or anti-ice.

8. The coated article of claim 6 wherein the hydrophobic surface effect agent is selected from the group consisting of hydrophobic non-fluorinated cationic acrylic polymers, hydrophobic non-fluorinated anionic acrylic polymers, hydrophobic non-fluorinated nonionic acrylic polymers, partially fluorinated urethanes, hydrophobic non-fluorinated urethanes, cationic partially fluorinated acrylic polymers or copolymers, nonionic partially fluorinated acrylic polymers or copolymers, partially fluorinated acrylamide polymers or copolymers, fluorinated phosphates, fluorinated ethoxylates, fluorinated or non-fluorinated organosilanes, silicones, waxes, including parafins, and mixtures thereof.

9. The coated article of claim 1, where the coating comprises 0.2 to 5 of the hydrophobic compound, based on the total solids weight of the coating, and further comprises a dried coating base.

10. The coated article of claim 1, where the coating comprises 0.25 to 2% of the hydrophobic compound, based on the total solids weight of the coating.

11. The coated article of claim 1 wherein the article is unglazed concrete, brick, tile, granite, limestone, marble, grout, mortar, statuary, monument, wood, composite material, terrazzo, gypsum board, wall or ceiling panel, glass, metal, or a combination thereof.

12. The coated article of claim 9, where the coating base is selected from the group consisting of an acrylic polymer, epoxy polymer, vinyl polymer, and polyurethane polymer in the form of an inerior house paint, exterior house paint, stain, or clear coating.

13. A method of imparting a surface effect to an article comprising contacting a the surface of the article with a durable coating to form a partially or completely coated article,
wherein the coating comprises a coating base and 0.1 to 5% by weight of a hydrophobic compound, based on the total solids weight of the coating, selected from a cyclic or acyclic alcohol which is substituted with at least one-R¹, -C(O)R¹, -(CH₂CH₂O**)**ₙ(CH(CH₃)CH₂O)ₘR²,-(CH₂CH₂O)ₙ(CH(CH₃)CH₂O)ₘC(O)R¹, or mixtures thereof;wherein
each n is independently 0 to 20;
each m is independently 0 to 20;
m+n is greater than 0;
each R¹ is independently a linear or branched alkyl group having 5 to 29 carbons optionally comprising at least 1 unsaturated bond;
each R² is independently -H, a linear or branched alkyl group having 6 to 30 carbons optionally comprising at least 1 unsaturated bond; and
the coating has a thickness of at least 0.1 mils,
wherein the hydrophobic compound is selected from Formulas (Ia), or (Ib): 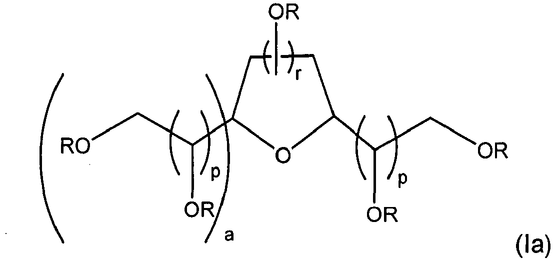 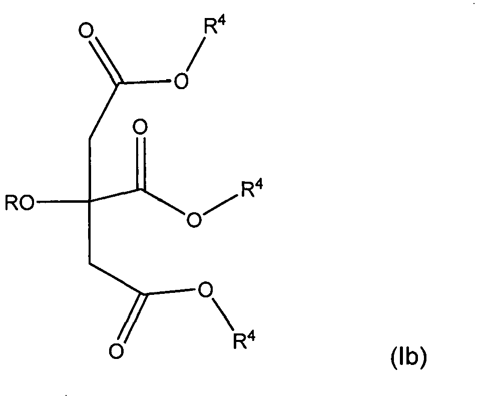
wherein each R is independently -H; -R¹; -C(O)R¹; -(CH₂CH₂O)ₙ(CH(CH₃)CH₂O)ₘR²; or
-(CH₂CH₂O)ₙ(CH(CH₃)CH₂O)ₘC(O)R¹; r is 1 to 3; a is 0 or 1; p is independently 0 to 2; provided that a is 0 when r is 3; and wherein each n, each m, m+n, each R¹ and each R² are as defined above;
provided when Formula (Ia) is chosen, then at least one R is -H and at least one R is a -R¹; -C(O)R¹; -(CH₂CH₂O)ₙ(CH(CH₃)CH₂O)ₘR²;
or -(CH₂CH₂O)ₙ(CH(CH₃)CH₂O)ₘC(O)R¹; each R⁴ is independently -H, a linear or branched alkyl group having 6 to 30 carbons optionally comprising at least 1 unsaturated bond, or combinations thereof; -(CH₂CH₂O)ₙ(CH(CH₃)CH₂O)ₘR²; or -(CH₂CH₂O)ₙ(CH(CH₃)CH₂O)ₘC(O)R¹;
provided when Formula (Ib) is chosen, then at least one R or R⁴ is -H; and at least one R or R⁴ is a linear or branched alkyl group optionally comprising at least 1 unsaturated bond, or combinations thereof; -(CH₂CH₂O)ₙ(CH(CH₃)CH₂O)ₘR²;
or -(CH₂CH₂O)ₙ(CH(CH₃)CH₂O)ₘC(O)R¹.

14. The method of claim 13, further comprising the step of heating the partially or completely coated article.

15. The method of claim 14, further comprising the step of solidifying the coating by drying, cooling, or allowing to cool.

## Patentansprüche

1. Beschichteter Artikel umfassend eine teilweise oder vollständige dauerhafte Beschichtung auf der Oberfläche eines Artikels,
wobei die Beschichtung ein Beschichtungsgrundmaterial und 0,1 bis 5 Gew.-% einer hydrophoben Verbindung, auf das gesamte Feststoffgewicht der Beschichtung bezogen, umfasst, ausgewählt aus einem cyclischen oder acyclischen Alkohol, der mit mindestens einem -R¹, -C(O)R¹, -(CH₂CH₂O)n(CH(CH₃)CH₂O)mR²,-(CH₂CH₂O)ₙ(CH(CH₃)CH₂O)ₘC(O)R¹ substituiert ist, oder Mischungen davon;
wobei
jedes n unabhängig 0 bis 20 beträgt;
jedes m unabhängig 0 bis 20 beträgt;
m + n mehr als 0 betragen;
jedes R¹ unabhängig eine lineare oder verzweigte Alkylgruppe ist, die 5 bis 29 Kohlenstoffatome aufweist, und wahlweise mindestens 1 ungesättigte Bindung umfasst;
jedes R² unabhängig -H, eine lineare oder verzweigte Alkylgruppe ist, die 6 bis 30 Kohlenstoffatome aufweist, und wahlweise mindestens 1 ungesättigte Bindung umfasst; und
die Beschichtung eine Dicke von mindestens 0,1 mil aufweist,
wobei die hydrophobe Verbindung unter den Formeln (Ia) oder (Ib) ausgewählt wird: 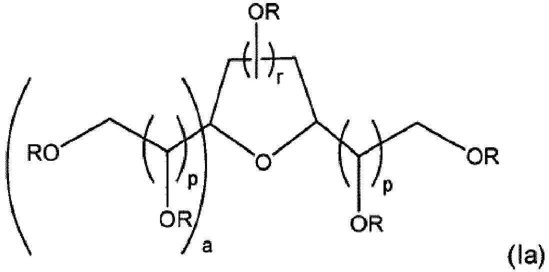 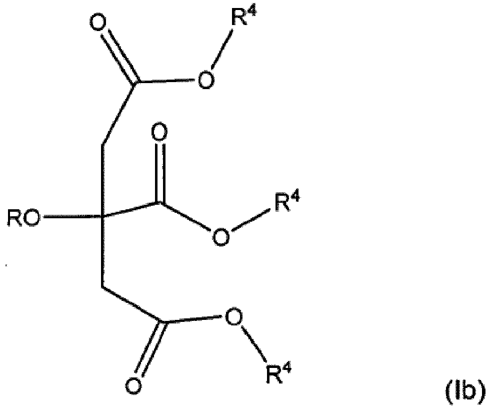
wobei jedes R unabhängig -H, -R¹, -C(O)R¹, -(CH₂CH₂O)ₙ(CH(CH₃)CH₂O)ₘR² oder -(CH₂CH₂O)ₙ(CH(CH₃)CH₂O)ₘC(O)R¹ ist;
r 1 bis 3 beträgt;
a 0 oder 1 beträgt;
p unabhängig 0 bis 2 beträgt;
vorausgesetzt, dass a 0 beträgt, wenn r 3 beträgt;
und wobei jedes n, jedes m, m + n, jedes R¹ und jedes R² die obige Definition aufweist;
vorausgesetzt dass, wenn die Formel (Ia) gewählt wird, mindestens ein R -H ist und mindestens ein R ein R¹, -C(O)R¹, -(CH₂CH₂O)ₙ(CH(CH₃)CH₂O)ₘR² oder-(CH₂CH₂O)ₙ(CH(CH₃)CH₂O)ₘC(O)R¹ ist;
jedes R⁴ unabhängig -H, eine lineare oder verzweigte Alkylgruppe, die 6 bis 30 Kohlenstoffatome aufweist und wahlweise mindestens 1 ungesättigte Bindung umfasst, oder Kombinationen davon, -(CH₂CH₂O)ₙ(CH(CH₃)CH₂O)ₘR² oder-(CH₂CH₂O)ₙ(CH(CH₃)CH₂O)ₘC(O)R¹ ist;
vorausgesetzt, dass, wenn die Formel (Ib) gewählt wird, mindestens ein R oder R⁴ -H ist und mindestens ein R oder R⁴ eine lineare oder verzweigte Alkylgruppe, die wahlweise mindestens 1 ungesättigte Bindung umfasst oder Kombinationen davon,-(CH₂CH₂O)ₙ(CH(CH₃)CH₂O)ₘR² oder-(CH₂CH₂O)ₙ(CH(CH₃)CH₂O)ₘC(O)R¹ ist.

2. Beschichteter Artikel nach Anspruch 1, wobei die hydrophobe Verbindung von der Formel (Ia) ausgewählt wird, um die Formel (Ia') zu sein: 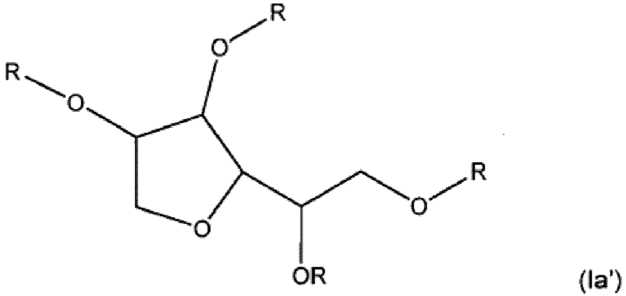 wobei R ferner unabhängig auf -H, -R¹ oder -C(O)R¹ beschränkt ist.

3. Beschichteter Artikel nach Anspruch 1, wobei die hydrophobe Verbindung von der Formel (Ia) ausgewählt wird, um die Formel (Ia') zu sein: 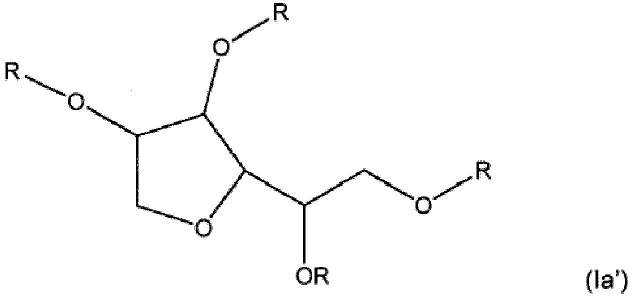 wobei R ferner unabhängig auf -H, -(CH₂CH₂O)ₙ(CH(CH₃)CH₂O)ₘR² oder-(CH₂CH₂O)ₙ(CH(CH₃)CH₂O)ₘC(O)R¹ beschränkt ist.

4. Beschichteter Artikel nach Anspruch 1, wobei die hydrophobe Verbindung von der Formel (Ib) ausgewählt wird.

5. Beschichteter Artikel nach Anspruch 1, wobei die hydrophobe Verbindung mit mindestens zwei -R¹, -C(O)R¹, -(CH₂CH₂O)n(CH(CH₃)CH₂O)mR²,-(CH₂CH₂O)ₙ(CH(CH₃)CH₂O)ₘC(O)R¹ oder Mischungen davon substituiert ist.

6. Beschichteter Artikel nach Anspruch 1, wobei die Beschichtung ferner ein hydrophobes Oberflächeneffektmittel umfasst.

7. Beschichteter Artikel nach Anspruch 6, wobei der Oberflächeneffekt Feuchtigkeitskontrolle, Festigkeit, Geleitschutz, Antistatik, Antiverhakung, Antipilling, Fleckenabweisung, Fleckenablösung, Schmutzabweisung, Schmutzablösung, Wasserabweisung, Ölabweisung, Geruchsbekämpfung, Antimikrobiotikum, Sonnenschutz, Antiblockmittel, Reinigungsfähigkeit, Staubresistenz, Egalisierung, Korrosionsfestigkeit, Säurefestigkeit, Antibeschlag und Antieis ist.

8. Beschichteter Artikel nach Anspruch 6, wobei das hydrophobe Oberflächeneffektmittel aus der Gruppe ausgewählt ist bestehend aus hydrophoben, nichtfluorierten, kationischen, acrylischen Polymeren, hydrophoben, nichtfluorierten, anionischen, acrylischen Polymeren, hydrophoben, nichtfluorierten, nichtionischen, acrylischen Polymeren, teilweise fluorierten Urethanen, hydrophoben, nichtfluorierten Urethanen, kationischen, teilweise fluorierten, acrylischen Polymeren oder Copolymeren, nichtionischen, teilweise fluorierten, acrylischen Polymeren oder Copolymeren, teilweise fluorierten Acrylamidpolymeren oder Copolymeren, fluorierten Phosphaten, fluorierten Ethoxylaten, fluorierten oder nichtfluorierten Organosilanen, Siliconen, Wachsen einschließlich Paraffinen und Mischungen davon.

9. Beschichteter Artikel nach Anspruch 1, wobei die Beschichtung 0,2 bis 5 % der hydrophoben Verbindung, auf das gesamte Feststoffgewicht der Beschichtung bezogen, umfasst und ferner ein getrocknetes Beschichtungsgrundmaterial umfasst.

10. Beschichteter Artikel nach Anspruch 1, wobei die Beschichtung 0,25 bis 2 % der hydrophoben Verbindung, auf das gesamte Feststoffgewicht der Beschichtung bezogen, umfasst.

11. Beschichteter Artikel nach Anspruch 1, wobei der Artikel unglasierter Beton, Backstein, Ziegel, Granit, Kalkstein, Marmor, Fugenmörtel, Mörtel, Statue, Denkmal, Holz, Verbundwerkstoffmaterial, Terrazzo, Gipsplatte, Wand- oder Deckenplatte, Glas, Metall oder eine Kombination davon ist.

12. Beschichteter Artikel nach Anspruch 9, wobei das Beschichtungsgrundmaterial aus der Gruppe ausgewählt ist bestehend aus einem acrylischen Polymer, Epoxidpolymer, Vinylpolymer und Polyurethanpolymer in Form einer Malerfarbe für den Innenbereich, Fassadenfarbe, Beize oder Klarbeschichtung.

13. Verfahren zum Vermitteln eines Oberflächeneffekts einem Artikel, umfassend Kontaktieren der Oberfläche des Artikels mit einer dauerhaften Beschichtung, um einen teilweise oder vollständig beschichteten Artikel zu bilden,
wobei die Beschichtung ein Beschichtungsgrundmaterial und 0,1 bis 5 Gew.-% einer hydrophoben Verbindung, auf das gesamte Feststoffgewicht der Beschichtung bezogen, umfasst ausgewählt aus einem cyclischen oder acyclischen Alkohol, der mit mindestens einem -R¹, -C(O)R¹, -(CH₂CH₂O)n(CH(CH₃)CH₂O)mR²,-(CH₂CH₂O)ₙ(CH(CH₃)CH₂O)ₘC(O)R¹ substituiert ist, oder Mischungen davon;
wobei
jedes n unabhängig 0 bis 20 beträgt;
jedes m unabhängig 0 bis 20 beträgt;
m + n mehr als 0 betragen;
jedes R¹ unabhängig eine lineare oder verzweigte Alkylgruppe ist, die 5 bis 29 Kohlenstoffatome aufweist und wahlweise mindestens 1 ungesättigte Bindung umfasst;
jedes R² unabhängig -H, eine lineare oder verzweigte Alkylgruppe ist, die 6 bis 30 Kohlenstoffatome aufweist und wahlweise mindestens 1 ungesättigte Bindung umfasst; und
die Beschichtung eine Dicke von mindestens 0,1 mil aufweist,
wobei die hydrophobe Verbindung aus den Formeln (Ia) oder (Ib) ausgewählt wird: 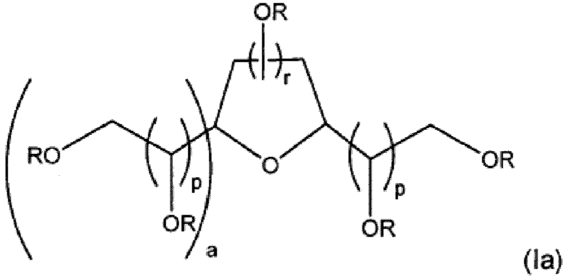 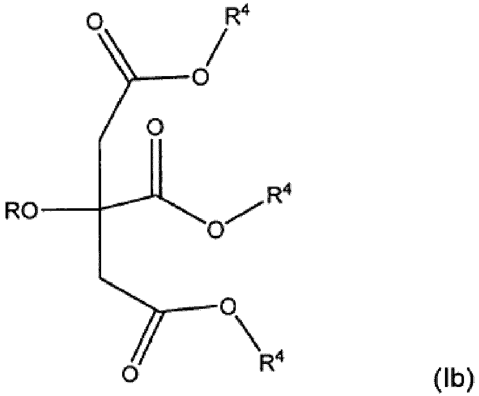
wobei jedes R unabhängig -H, -R¹, -C(O)R¹, -(CH₂CH₂O)ₙ(CH(CH₃)CH₂O)ₘR² oder -(CH₂CH₂O)ₙ(CH(CH₃)CH₂O)ₘC(O)R¹ ist; r 1 bis 3 beträgt; a 0 oder 1 beträgt; p unabhängig 0 bis 2 beträgt; vorausgesetzt, dass a 0 beträgt, wenn r 3 beträgt; und wobei jedes n, jedes m, m + n, jedes R¹ und jedes R² die obige Definition aufweist;
vorausgesetzt dass, wenn die Formel (Ia) gewählt wird, mindestens ein R -H ist und mindestens ein R ein -R¹, -C(O)R¹ -(CH₂CH₂O)ₙ(CH(CH₃)CH₂O)ₘR² oder-(CH₂CH₂O)ₙ(CH(CH₃)CH₂O)ₘC(O)R¹ ist; jedes R⁴ unabhängig -H, eine lineare oder verzweigte Alkylgruppe, die 6 bis 30 Kohlenstoffatome aufweist und wahlweise mindestens 1 ungesättigte Bindung umfasst, oder Kombinationen davon;
-(CH₂CH₂O)ₙ(CH(CH₃)CH₂O)ₘR²; oder
-(CH₂CH₂O)ₙ(CH(CH₃)CH₂O)ₘC(O)R¹ ist;
vorausgesetzt, dass, wenn die Formel (Ib) gewählt wird, mindestens ein R oder R⁴ -H ist; und mindestens ein R oder R⁴ eine lineare oder verzweigte Alkylgruppe, die wahlweise mindestens 1 ungesättigte Bindung umfasst, oder Kombinationen davon,
-(CH₂CH₂O)ₙ(CH(CH₃)CH₂O)ₘR² ;
oder-(CH₂CH₂O)ₙ(CH(CH₃)CH₂O)ₘC(O)R¹ ist.

14. Verfahren nach Anspruch 13, ferner den Schritt des Erhitzens des teilweise oder vollständig beschichteten Artikels umfassend.

15. Verfahren nach Anspruch 14, ferner den Schritt des Verfestigens der Beschichtung durch Trocknen, Kühlen oder Gestatten zu kühlen, umfassend.

## Revendications

1. Article revêtu comprenant un revêtement durable partiel ou complet sur la surface d'un article,
le revêtement comprenant une base de revêtement et de 0,1 à 5 % en poids d'un composé hydrophobe, sur la base du poids total des matières solides du revêtement, sélectionné parmi un alcool cyclique ou acyclique qui est substitué par au moins un -R¹,-C(O)R¹, -(CH₂CH₂O)n(CH(CH₃)CH₂O)mR², -(CH₂CH₂O)ₙ(CH(CH₃)CH₂O)ₘC(O)R¹, ou leurs mélanges;
dans lequel
chaque n est indépendamment 0 à 20;
chaque m est indépendamment 0 à 20;
m + n est supérieur à 0;
chaque R¹ est indépendamment un groupe alkyle linéaire ou ramifié ayant de 5 à 29 atomes de carbone comprenant facultativement au moins 1 liaison insaturée;
chaque R² est indépendamment -H, un groupe alkyle linéaire ou ramifié ayant de 6 à 30 atomes de carbone comprenant facultativement au moins 1 liaison insaturée; et
le revêtement possède une épaisseur d'au moins 0,1 mils,
dans lequel le composé hydrophobe est sélectionné parmi les Formules (la), ou (Ib): 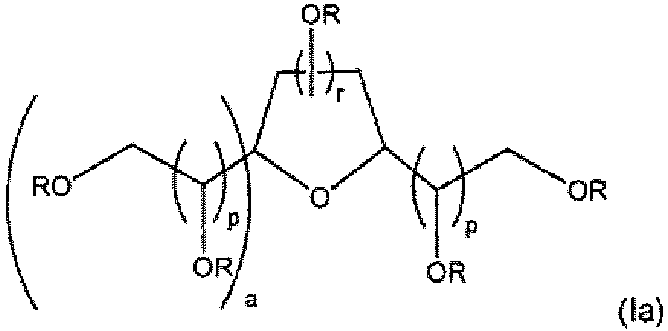 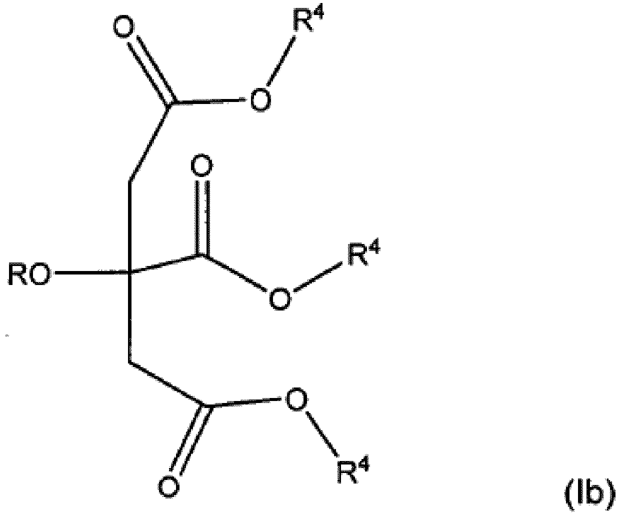
dans lequel chaque R est indépendamment -H; -R¹; -C(O)R¹; -(CH₂CH₂O)ₙ(CH(CH₃)CH₂O)ₘR²; ou -(CH₂CH₂O)ₙ(CH(CH₃)CH₂O)ₘC(O)R¹;
r est 1 à 3;
a est 0 ou 1;
p est indépendamment 0 à 2;
à condition que a soit 0 lorsque r est 3;
et dans lequel chaque n, chaque m, m + n, chaque R¹ et chaque R² sont tels que définis ci-dessus;
à condition que lorsque la Formule (la) est choisie, alors au moins un R est -H et au moins un R est un -R¹; -C(O)R¹; -(CH₂CH₂O)ₙ(CH(CH₃)CH₂O)ₘR²; ou-(CH₂CH₂O)ₙ(CH(CH₃)CH₂O)ₘC(O)R¹;
chaque R⁴ est indépendamment -H, un groupe alkyle linéaire ou ramifié ayant de 6 à 30 atomes de carbone comprenant facultativement au moins 1 liaison insaturée, ou leurs combinaisons; -(CH₂CH₂O)ₙ(CH(CH₃)CH₂O)ₘR²; ou (CH₂CH₂O)ₙ(CH(CH₃)CH₂O)ₘC(O)R¹;
à condition que lorsque la Formule (Ib) est choisie, alors au moins un R ou R⁴ est-H; et au moins un R ou R⁴ est un groupe alkyle linéaire ou ramifié comprenant facultativement au moins 1 liaison insaturée, ou leurs combinaisons; (CH₂CH₂O)ₙ(CH(CH₃)CH₂O)ₘR²; ou -(CH₂CH₂O)ₙ(CH(CH₃)CH₂O)ₘC(O)R¹.

2. Article revêtu selon la revendication 1, dans lequel le composé hydrophobe est sélectionné parmi la Formule (la) pour être la Formule (la'): 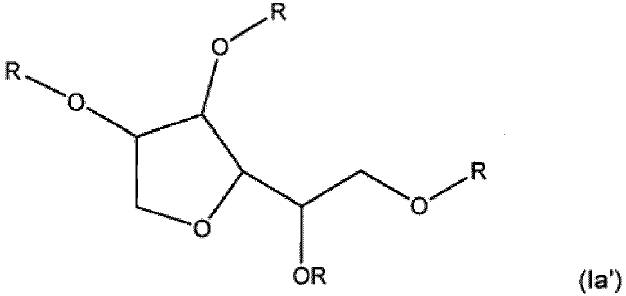 dans lequel R est en outre limité à indépendamment -H; -R¹; ou -C(O)R¹.

3. Article revêtu selon la revendication 1, dans lequel le composé hydrophobe est sélectionné parmi la Formule (la) pour être la Formule (la') 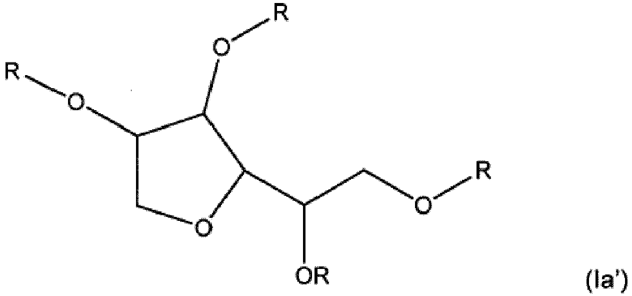 dans lequel R est en outre limité à indépendamment -H;-(CH₂CH₂O)ₙ(CH(CH₃)CH₂O)ₘR²; ou -(CH₂CH₂O)ₙ(CH(CH₃)CH₂O)ₘC(O)R¹.

4. Article revêtu selon la revendication 1, dans lequel le composé hydrophobe est sélectionné à partir de la Formule (Ib).

5. Article revêtu selon la revendication 1, dans lequel le composé hydrophobe est substitué par au moins deux -R¹, -C(O)R¹, -(CH₂CH₂O)n(CH(CH₃)CH₂O)mR²,-(CH₂CH₂O)ₙ(CH(CH₃)CH₂O)ₘC(O)R¹, ou leurs mélanges.

6. Article revêtu selon la revendication 1, dans lequel le revêtement comprend en outre un agent à effet de surface hydrophobe.

7. Article revêtu selon la revendication 6, dans lequel l'effet de surface est le contrôle de l'humidité, la résistance, le caractère antiglissant, le caractère antistatique, le caractère anti-accroc, le caractère anti-bouloche, le caractère antitache, l'aptitude au détachage, le caractère anti-salissant, qui facilite le lavage, qui est hydrofuge, qui est oléofuge, qui possède des propriétés de régulation des odeurs, qui est antimicrobien, qui protège des effets du rayonnement solaire, qui est anti-bloquant, qui présente une aptitude au nettoyage, une résistance à la poussière, qui est nivelant, qui est résistant à la corrosion, qui est résistant aux acides, qui possède un caractère antibuée, ou antigel.

8. Article revêtu selon la revendication 6 dans lequel l'agent à effet de surface hydrophobe est sélectionné dans le groupe constitué des polymères acryliques cationiques non fluorés hydrophobes, des polymères acryliques anioniques non fluorés hydrophobes, des polymères acryliques non ioniques non fluorés hydrophobes, des uréthanes partiellement fluorés, des uréthanes non fluorés hydrophobes, des polymères ou copolymères acryliques partiellement fluorés cationiques, des polymères ou copolymères acryliques partiellement fluorés non ioniques, des polymères ou copolymères d'acrylamide partiellement fluorés, des phosphates fluorés, des éthoxylates fluorés, des organosilanes fluorés ou non fluorés, des silicones, des cires, dont les paraffines, et leurs mélanges.

9. Article revêtu selon la revendication 1, dans lequel le revêtement comprend de 0,2 à 5 % du composé hydrophobe, sur la base du poids total des matières solides du revêtement, et comprend en outre une base de revêtement séchée.

10. Article revêtu selon la revendication 1, dans lequel le revêtement comprend de 0,25 à 2 % du composé hydrophobe, sur la base du poids total des matières solides du revêtement.

11. Article revêtu selon la revendication 1, l'article étant du béton non vitrifié, une brique, une tuile, du granit, de la chaux, du marbre, du coulis, du mortier, une statue, un monument, du bois, un matériau composite, du terrazzo, un panneau de gypse, un panneau mural ou de plafond, du verre, du métal, ou une combinaison de ceux-ci.

12. Article revêtu selon la revendication 9, dans lequel la base de revêtement est sélectionnée dans le groupe constitué d'un polymère acrylique, polymère époxy, polymère de vinyle, et polymère de polyuréthane sous la forme d'une peinture intérieure de maison, d'une peinture extérieure de maison, d'une teinture, ou d'un revêtement clair.

13. Procédé consistant à conférer un effet de surface à un article comprenant la mise en contact de la surface de l'article avec un revêtement durable pour former un article partiellement ou entièrement revêtu,
dans lequel le revêtement comprend une base de revêtement et de 0,1 à 5 % en poids d'un composé hydrophobe, sur la base du poids total des matières solides du revêtement, sélectionné parmi un alcool cyclique ou acyclique qui est substitué par au moins un -R¹,-C(O)R¹, -(CH₂CH₂O)n(CH(CH₃)CH₂O)mR², -(CH₂CH₂O)ₙ(CH(CH₃)CH₂O)ₘC(O)R¹, ou leurs mélanges; dans lequel
chaque n est indépendamment 0 à 20;
chaque m est indépendamment 0 à 20;
m + n est supérieur à 0;
chaque R¹ est indépendamment un groupe alkyle linéaire ou ramifié ayant de 5 à 29 atomes de carbone comprenant facultativement au moins 1 liaison insaturée;
chaque R² est indépendamment -H, un groupe alkyle linéaire ou ramifié ayant de 6 à 30 atomes de carbone comprenant facultativement au moins 1 liaison insaturée; et
le revêtement possède une épaisseur d'au moins 0,1 mils,
dans lequel le composé hydrophobe est sélectionné parmi les Formules (la), ou (Ib): 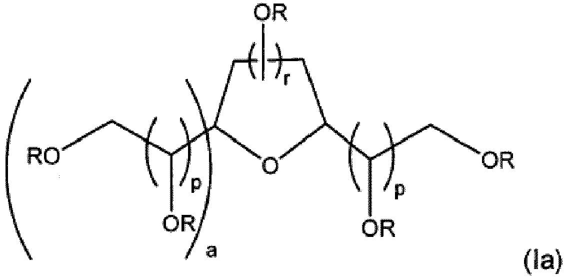 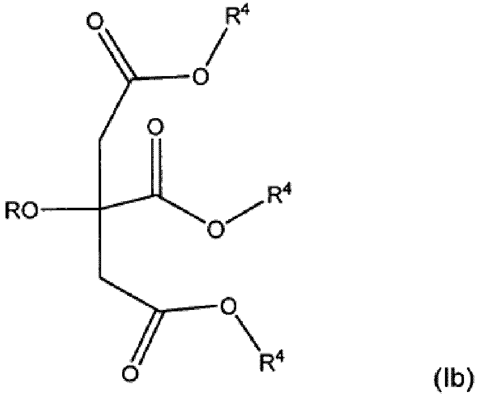
dans lequel chaque R est indépendamment -H; -R¹; -C(O)R¹;-(CH₂CH₂O)ₙ(CH(CH₃)CH₂O)ₘR²; ou -(CH₂CH₂O)ₙ(CH(CH₃)CH₂O)ₘC(O)R¹; r est 1 à 3; a est 0 ou 1; p est indépendamment 0 à 2; à condition que a soit 0 lorsque r est 3; et dans lequel chaque n, chaque m, m + n, chaque R¹ et chaque R² sont tels que définis ci-dessus;
à condition que lorsque la Formule (la) est choisie, alors au moins un R est -H et au moins un R est un -R¹; -C(O)R¹; -(CH₂CH₂O)ₙ(CH(CH₃)CH₂O)ₘR²; ou-(CH₂CH₂O)ₙ(CH(CH₃)CH₂O)ₘC(O)R¹; chaque R⁴ est indépendamment -H, un groupe alkyle linéaire ou ramifié ayant de 6 à 30 atomes de carbone comprenant facultativement au moins 1 liaison insaturée, ou leurs combinaisons;
-(CH₂CH₂O)ₙ(CH(CH₃)CH₂O)ₘR²; ou
-(CH₂CH₂O)ₙ(CH(CH₃)CH₂O)ₘC(O)R¹;
à condition que lorsque la Formule (Ib) est choisie, alors au moins un R ou R⁴ est-H; et au moins un R ou R⁴ est un groupe alkyle linéaire ou ramifié comprenant facultativement au moins 1 liaison insaturée, ou leurs combinaisons;
-(CH₂CH₂O)ₙ(CH(CH₃)CH₂O)ₘR²;
ou -(CH₂CH₂O)ₙ(CH(CH₃)CH₂O)ₘC(O)R¹.

14. Procédé selon la revendication 13, comprenant en outre l'étape de chauffage de l'article partiellement ou entièrement revêtu.

15. Procédé selon la revendication 14, comprenant en outre l'étape de solidification du revêtement par séchage, refroidissement ou en le laissant refroidir.
